# EUROPÄISCHE PATENTSCHRIFT

(11) **EP 4 101 909 B1**
(45) Veröffentlichungstag und Bekanntmachung des Hinweises auf die Patenterteilung: **25.03.2026**
(21) Anmeldenummer: 22173992.3
(22) Anmeldetag: 18.05.2022
(51) Int. Cl.: C10B 53/07, C10B 19/00, C10G 1/10, C09C 1/48

(54) **VERFAHREN ZUR HERSTELLUNG VON RUSS AUS ABFÄLLEN**
METHOD FOR THE PRODUCTION OF CARBON BLACK FROM WASTE
PROCÉDÉ DE PRODUCTION DE NOIR DE FUMÉE À PARTIR DES DÉCHETS

(30) Priorität: 08.06.2021 DE 102021205776
(43) Veröffentlichungstag der Anmeldung: 14.12.2022
(73) Patentinhaber: Continental Reifen Deutschland GmbH, 30175 Hannover (DE)
(72) Erfinder: Burkhart, Alexander, 30165 Hannover (DE); Liu, Fei, 30165 Hannover (DE)
(74) Vertreter: Continental Corporation

(56) Entgegenhaltungen:
- CN-A- 110 938 451
- US-A- 5 437 237
- US-A1- 2011 198 207
- US-B1- 7 101 464
- US-B1- 9 120 977
- ANONYMOUS: "Carbon black - Wikipedia", 27 April 2021 (2021-04-27), XP055974306, Retrieved from the Internet <URL:https://web.archive.org/web/20210427043047/https://en.wikipedia.org/wiki/Carbon_black> [retrieved on 20221024]

## Beschreibung

Die Erfindung betrifft ein Verfahren zur Herstellung von Ruß aus Abfällen, einen Ruß, der nach dem Verfahren hergestellt ist, eine Kautschukmischung und einen Fahrzeugreifen enthaltend den Ruß.

Es besteht ein immer größer werdender Bedarf nach geeigneten Recycling-Verfahren, um die Materialien von Produkten wie Fahrzeugreifen, insbesondere Altreifen, möglichst vollständig wieder verwenden zu können und somit das Entsorgungsproblem zu lösen.

Hierbei sollte zum einen das Recycling-Verfahren selbst möglichst ökologisch und ökonomisch optimiert sein.

Zum anderen sollte das Recycling-Produkt Eigenschaften aufweisen, die möglichst an die vergleichbarer Ausgangsstoffe herankommen.

Es ist bekannt, dass Fahrzeugreifen, insbesondere Altreifen, mittels Pyrolyse unter Sauerstoffausschluss entsorgt werden können. Hierbei entstehen u. a. als Produkte Pyrolyse-Ruß, Pyrolyse-Öl und Pyrolyse-Gase, wobei insbesondere Pyrolyse-Ruß als Füllstoff für frische Kautschukmischungen in Frage kommt.

Der Verwendung von Pyrolyse-Rußen in Kautschukmischungen für Neureifen sind jedoch durch die erzielten Eigenschaften der Ruße Grenzen gesetzt, da sie sich von den ASTM-Rußen, wie N660, unterscheiden. Dies führt insbesondere zu einer geringeren Verstärkungswirkung in Kautschukmischungen, sodass diese nachteilige physikalische Eigenschaften aufweisen können.

Die WO 2013184074 A1 offenbart ein Plasma-Pyrolyse-Verfahren, bei dem Altreifen zu einem Pulver zerkleinert werden und das Pulver mittels eines Trägergases in einen Induktions-Thermoprozessor ("induction thermal processor") überführt wird, um darin zu Gas ("syngas") und als Nebenprodukt Ruß umgesetzt zu werden.

Die US3843457 offenbart ein Verfahren zur Mikrowellen-Pyrolyse von zerkleinerten Abfällen bei Temperaturen von weniger 200 °C in Anwesenheit eines Gasstroms. Durch die Verwendung von reduzierenden Gasen, wie Wasserstoff (H₂) sollen bei der Mikrowellen-Pyrolyse entstehende Gase wie Kohlenstoffmonoxid (CO) und Kohlenstoffdioxid (CO₂) reduziert werden. Bei dem Verfahren wird insbesondere das entstehende Gasgemisch als Verfahrensprodukt gewonnen, während entstehende Feststoffe entsorgt werden.

In dem Artikel Adrian M. Cunliffe und Paul T. Williams, 1999, "Influence of Process Conditions on the Rate of Activation of Chars from Pyrolysis of used tires", Energy & Fuels, Vol. 13, No. 1, 1999, S. 166 - 175, wird ein Verfahren zur nachträglichen Aktivierung von Kohle ("char") mit Stickstoff oder Stickstoff und Kohlenstoffdioxid bei Temperaturen von 835 °C oder mehr offenbart, wobei die Kohle zuvor mittels einer Pyrolyse in einem statischen Bettreaktor gewonnen wurde.

Die EP 3173251 A1 offenbart eine Kautschukmischung, die unter anderem einen recycelten Ruß aus Pyrolyse enthält, welcher an der Oberfläche Hydroxy- und/oder Carboxy-Gruppen trägt. Diese Gruppen werden durch eine Oxidation der Oberfläche unter sauren Bedingungen, mittels einer Säure, herbeigeführt.

US 7,101,464 B1 betrifft eine Mikrowellen-Pyrolyse ganzer Altreifen, wobei eine Apparatur eingesetzt wird, die in vertikaler Anordnung eine Vorheizkammer, eine Bestrahlungskammer und eine Kühlkammer aufweist.

CN 11093845 A betrifft ein thermisches cracken von Altreifen in Abwesenheit von Sauerstoff und Schutzgasen.

US 2011/0198207 A betrifft eine molekulare Destillation von Altreifen mittels einer Kombination aus Ultraschall und Mikrowellen.

Der vorliegenden Erfindung liegt die Aufgabe zugrunde, ein Verfahren zur Herstellung von Ruß aus Abfällen bereitzustellen, durch welches ein Ruß erhalten wird, der gegenüber bekannten Pyrolyse-Rußen ein verbessertes Eigenschaftsbild aufweist. Dabei soll insbesondere eine größere Verstärkungswirkung der umgebenden Matrix bei der Verwendung des Rußes in Mischungen für technische Kautschukartikel und sonstige Kunststoffe erzielt werden.

Hierdurch soll der entstandene Ruß einem breiteren Anwendungsspektrum zugänglich gemacht werden als im Stand der Technik bekannte Pyrolyse-Ruße. Das Verfahren soll zudem möglichst ökonomisch und ökologisch effizient sein.

Gelöst wird die Aufgabe dadurch, dass das Verfahren wenigstens die folgenden Verfahrensschritte umfasst:
A) Bereitstellung von Abfällen;
B) Optionales Vorheizen der Abfälle auf eine Temperatur von 50 bis 200 °C;
C) Pyrolyse der Abfälle mittels Mikrowellen und unter Sauerstoffausschluss in einer Reaktionskammer bei einer Temperatur von 400 bis 800°C, wodurch Ruß und Pyrolyse-Gas als Produkt anfällt, wobei das Pyrolyse-Gas aus der Reaktionskammer abgeführt wird, so dass es in Schritt D) nicht zur Verfügung steht;
D) Abkühlen des Rußes, wobei
bei Schritt D) ein Gas bei einer Temperatur von 100 bis 300°C über die Abfälle bzw. den Ruß geleitet wird und wobei das Gas wenigstens eine Substanz umfasst, die ausgewählt ist aus der Gruppe bestehend aus Kohlenstoffoxiden, wie insbesondere Kohlenmonoxid (CO) und Kohlenstoffdioxid (CO₂), Schwefeloxiden, wie insbesondere Schwefelmonoxid (SO), Schwefeldioxid (SO₂), Schwefeltrioxid (SO₃) und Schwefeltetraoxid (SO₄), Stickstoffoxide, wie insbesondere Stickstoffmonoxid (NO), Distickstofftrioxid (N₂O₃), Stickstoffdioxid (NO₂), Wasser (H₂O) und Sauerstoff (O₂).

Dadurch, dass wenigstens eine der genannten Substanzen, vorliegend auch als "Reaktionsgase" bezeichnet, über den abgekühlten Ruß geleitet wird, wird dessen Oberfläche durch Reaktion mit der Substanz in dem Gas aktiviert, wobei sich an der Oberfläche aktive chemische Gruppen bilden, wie beispielsweise Hydroxy-Gruppen (-OH), Amino-Gruppen (-NH₂), Schwefeldioxid-Gruppen (-SO₂) und/oder Carboxy-Gruppen (-COOH).

Hierdurch wird ein Ruß mit Oberflächeneigenschaften erzielt, der eine größere Verstärkung in einer umgebenden Matrix, wie einer Kautschukmischung für Fahrzeugreifen oder andere technische Kautschukartikel, bewirkt.

Gleichzeitig ist das Verfahren durch die wenigen Verfahrensschritte möglichst effizient. Insbesondere wird die Temperatur des entstandenen Rußes durch Abkühlen abgesenkt und hierbei das Gas über den Ruß geleitet, sodass die Restwärme des Rußes ausgenutzt wird und ein separater Aufwärmschritt entfällt.

Zudem wird auf Substanzen, die eine besondere Handhabung erfordern, wie insbesondere nicht gasförmige Säuren, verzichtet. Hierdurch ist das Verfahren im Vergleich zum Stand der Technik auch ökologisch und im Hinblick auf Gesundheitsaspekte optimiert.

Im Folgenden wird die Erfindung weiter erläutert und weitere vorteilhafte Ausführungsformen beschrieben. Soweit nicht anders angegeben können verschiedene Ausführungsformen auch miteinander kombiniert werden. Ferner sind von der Erfindung auch solche Gegenstände umfasst, die sich durch die Kombination von zwei oder mehreren Merkmalen unterschiedlicher Hierarchiestufe der Bevorzugung ergeben.

Der im Rahmen der vorliegenden Erfindung entstandene Ruß, wird auch als Pyrolyse-Ruß bezeichnet, da er das Produkt einer Pyrolyse unter Sauerstoffausschluss ist. Wenn von Pyrolyse-Rußen aus dem Stand der Technik die Rede ist, sind ebenfalls solche Ruße gemeint, die als Recycling-Produkte einer Pyrolyse von Abfällen, beispielsweise Altreifen, unter Sauerstoffausschluss hergestellt wurden.

Bevorzugt umfassen die Abfälle in Schritt A) Kunststoffe, bevorzugt Fahrzeugreifen und/oder andere technische Kautschukartikel. Hierbei werden unter den genannten Artikeln für die Verwendung als "Abfälle" in Schritt A) insbesondere gebrauchte Artikel, wie Altreifen, oder aber auch neue Artikel, wie im Produktionsprozess angefallene Ausschussartikel, verstanden.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Bevorzugt werden derartige Fahrzeugreifen verwendet, die einen vergleichsweise geringen Anteil an Kieselsäure (Silikat haltigen) Füllstoffen aufweisen, da somit auch der Asche-Gehalt des hergestellten Rußes geringer ausfällt.

Bevorzugt werden Fahrzeugreifen verwendet, die einen Gesamtkieselsäuregehalt von 0 bis zu 15 Gew.-% bezogen auf das Gesamtgewicht des Reifens aufweisen. Gemäß vorteilhafter Ausführungsformen der Erfindung werden Fahrzeugreifen verwendet, die einen Gesamtkieselsäuregehalt von 2 bis 6 Gew.-% bezogen auf das Gesamtgewicht des Reifens aufweisen. Hierbei handelt es sich insbesondere um Nutzfahrzeugreifen, die im Vergleich zu PKW-Reifen meist einen geringeren Anteil an Kieselsäure aufweisen.

Die Abfälle werden optional zerkleinert.

Gemäß bevorzugter Ausführungsformen können aber auch die unzerkleinerten Abfälle verwendet werden, wie "Ganzreifen" ("whole tire"). Die später stattfindende Pyrolyse ist eine Mikrowellen-Pyrolyse, welche es ermöglicht, auf den zusätzlichen Verfahrensschritt der Zerkleinerung zu verzichten.

Gemäß Schritt B) werden die Abfälle optional vorgeheizt.

Das Vorheizen auf Temperaturen von 50 bis 200 °C hat den Vorteil, dass die Mikrowellen-Pyrolyse, insbesondere von unzerkleinerten Abfällen, schneller und gleichmäßiger stattfinden kann, sodass auch der entstehende Ruß homogener ist.

Hierzu können sie vorab in eine separate Vorheizkammer überführt werden oder direkt in die Mikrowellen-Pyrolyse-Kammer.

Die Überführung direkt in die Mikrowellen-Kammer hat den Vorteil, dass eine separate Vorheizkammer entfällt.

Das Vorheizen in einer separaten Vorheizkammer hat wiederum den Vorteil, dass während der Pyrolyse eines ersten Artikels, wie eines Altreifens, ein zweiter Artikel zeitgleich vorgeheizt werden kann. Hierdurch ist ein semi-kontinuierliches Verfahren möglich.

Die Pyrolyse in Schritt C) findet unter Sauerstoffausschluss statt.

Es ist bevorzugt, dass die Pyrolyse in Schritt C) bei einer Temperatur von 400 bis 700°C, besonders bevorzugt 500 bis 650 °C, stattfindet.

Bei zu niedrigen Temperaturen ist eine vollständige Pyrolyse nicht sichergestellt, sodass in der Folge Ausgangsstoffe auf der Oberfläche der entstandenen Ruß-Partikel als Verunreinigung zurückbleiben. Dies führt zu verschlechterten Eigenschaften, insbesondere auch in einer Kautschukmischung enthaltend diese Ruße.

Bei zu hohen Temperaturen kann es zu Verkokungen an der Oberfläche der entstandenen Ruß-Partikel kommen, welche ebenfalls zu einer Reduzierung der Verstärkungseigenschaften des erhaltenen Pyrolyse-Rußes in der Kautschukmischung führen.

Der optimale Temperaturbereich liegt daher insbesondere bei Temperaturen von 500 bis 650 °C; in diesem Bereich ist besonders gut sichergestellt, dass eine vollständige Umsetzung erfolgt und zum anderen keine Verkokungen an der Oberfläche entstehen.

Bevorzugt findet die Pyrolyse in Schritt C) über einen Zeitraum von 0,1 Sekunden bis 10 Stunden, bevorzugt bis 4 Stunden, besonders bevorzugt bis 1 Stunde, statt. Je länger die Pyrolyse andauert, desto höher ist der Energieeintrag in das Material und das Ausmaß an Verkokungen auf der Rußoberfläche nimmt zu, was zu einer Reduzierung der Oberflächenaktivität führt und somit dem mit der Erfindung erzielten Vorteil entgegenwirkt.

Gemäß vorteilhafter Ausführungsformen der Erfindung beträgt die Dauer der Pyrolyse 0,1 bis 20 Sekunden und ist eine sogenannte Schnellpyrolyse ("Flashpyrolyse"). Hierbei ist es vorteilhaft, zerkleinerte Abfälle zu verwenden, um eine durchgängige Pyrolyse sicher zu stellen.

Gemäß weiterer vorteilhafter Ausführungsformen der Erfindung beträgt die Dauer der Pyrolyse 30 Minuten bis 10 Stunden, bevorzugt bis 4 Stunden, besonders bevorzugt bis 1 Stunde. Hierdurch können auch unzerkleinerte Abfälle verwendet werden, sodass ein separater Zerkleinerungsschritt entfällt.

Bevorzugt findet die Pyrolyse in Schritt C) bei einem Druck von 1,013 bar oder weniger statt, wie beispielsweise bei einem Druck von 0,9 bar.

Bei derartigen niedrigeren Drücken werden die entstehenden flüchtigen Verbindungen (engl. "volatiles") schneller aus der Reaktionskammer abgeführt und können somit nicht wieder auf der Oberfläche des entstehenden bzw. entstandenen Pyrolyse-Rußes kondensieren um eine Verkokung ("carbonaceous residue") zu bilden.

Als weiteres Produkt bei der Pyrolyse in Schritt C) entsteht Pyrolyse-Gas ("syngas"), welches direkt nach der Entstehung aus der Reaktionskammer abgeführt und somit dem Prozess entzogen wird. Dieses Pyrolysegas ist zu einem Großteil aus Wasserstoff (H₂) zusammengesetzt und steht zudem aufgrund der raschen Abführung nicht für eine Aktivierung der Oberfläche der entstandenen Rußpartikel zur Verfügung.

Das bei Schritt D) über die Abfälle bzw. den Ruß geleitete Gas umfasst wenigstens eine Substanz, die ausgewählt ist aus der Gruppe bestehend aus Kohlenstoffoxiden, wie insbesondere Kohlenmonoxid (CO) und Kohlenstoffdioxid (CO₂), Schwefeloxiden, wie insbesondere Schwefelmonoxid (SO), Schwefeldioxid (SO₂), Schwefeltrioxid (SO₃) und Schwefeltetraoxid (SO₄), Stickstoffoxide, wie insbesondere Stickstoffmonoxid (NO), Distickstofftrioxid (N₂O₃), Stickstoffdioxid (NO₂), Wasser (H₂O) und Sauerstoff (O₂).

Die wenigstens eine in dem Gas vorhandene Substanz soll eine Reaktion an der Oberfläche des entstandenen Rußes bewirken, sodass das Gas im Rahmen der vorliegenden Erfindung auch als "Reaktionsgas" bezeichnet wird.

In dem Gasstrom in Schritt D) ist bevorzugt kein zusätzliches Trägergas enthalten, sodass dieses bevorzugt zu 100 Gew.-% bzw. 100 Volumenprozent (Vol.-%) aus Reaktionsgas zusammengesetzt ist.

Hierbei ist es bevorzugt, dass das Reaktionsgas in Mengen von 1 bis 50 Gew.-%, bevorzugt 1 bis 25 Gew.-%, bezogen auf die Menge an entstandenem Ruß, über die entstandenen Rußpartikel geleitet wird. Im Fall von 100 kg entstandenem Ruß werden somit 1 bis 50 kg, bevorzugt 1 bis 25 kg, Reaktionsgas über den Ruß geleitet.

Das Gas umfassend wenigstens eine der genannten Substanzen wird bei Schritt D) bei einer Temperatur von 100 bis 300 °C eingeleitet. Besonders bevorzugt beträgt die Temperatur 200 bis 300 °C.

Hierdurch wird die notwendige Aktivierungsenergie bereitgestellt, um eine Reaktion zwischen dem Reaktionsgas und dem Pyrolyse-Ruß herbeizuführen, so dass sich an der Oberfläche aktiven Gruppen bilden können. Gleichzeitig ist die Temperatur aber nicht zu hoch, sodass unerwünschte Nebenreaktionen vermieden werden.

Ein weiterer Gegenstand des vorliegenden Textes ist ein Ruß, der nach dem erfindungsgemäßen Verfahren inklusive sämtlicher beschriebener Ausführungsformen und bevorzugter Merkmale hergestellt wurde.

Der Ruß weist durch die Oberflächenaktivierung den Vorteil auf, dass er eine vergleichsweise hohe Verstärkungswirkung z. B. in einer Kautschukmischung bewirkt, wodurch er einen adäquaten Ersatz für ein breites Spektrum an Standard-ASTM-Rußen bietet.

Ein weiterer Gegenstand des vorliegenden Textes ist eine Kautschukmischung enthaltend wenigstens einen Kautschuk und wenigstens einen Ruß gemäß diesem Text.

Ein weiterer Gegenstand des vorliegenden Textes ist ein Fahrzeugreifen, der in wenigstens einem Bauteil wenigstens einen Ruß gemäß diesem Text und/oder wenigstens eine Kautschukmischung gemäß diesem Text aufweist.

Ein weiterer Gegenstand des vorliegenden Textes ist die Verwendung des Rußes in Kunststoffen, Farben, Lacken und/oder elektronischen Bauteilen.

## Patentansprüche

1. Verfahren zur Herstellung von Ruß aus Abfällen, umfassend wenigstens die folgenden Verfahrensschritte:
A) Bereitstellung von Abfällen;
B) Optionales Vorheizen der Abfälle auf eine Temperatur von 50 bis 200 °C;
C) Pyrolyse der Abfälle mittels Mikrowellen und unter Sauerstoffausschluss in einer Reaktionskammer bei einer Temperatur von 400 bis 800°C, wodurch Ruß und Pyrolyse-Gas als Produkt anfällt, wobei das Pyrolyse-Gas aus der Reaktionskammer abgeführt wird, so dass es in Schritt D) nicht zur Verfügung steht;
D) Abkühlen des Rußes; wobei
bei Schritt D) ein Gas bei einer Temperatur von 100 bis 300°C über die Abfälle bzw. den Ruß geleitet wird, und wobei das Gas wenigstens eine Substanz umfasst, die ausgewählt ist aus der Gruppe bestehend aus Kohlenstoffoxiden, wie insbesondere Kohlenmonoxid (CO) und Kohlenstoffdioxid (CO₂), Schwefeloxiden, wie insbesondere Schwefelmonoxid (SO), Schwefeldioxid (SO₂), Schwefeltrioxid (SO₃) und Schwefeltetraoxid (SO₄), Stickstoffoxide, wie insbesondere Stickstoffmonoxid (NO), Distickstofftrioxid (N₂O₃), Stickstoffdioxid (NO₂), Wasser (H₂O) und Sauerstoff (O₂).

2. Verfahren nach einem der vorherigen Ansprüche, **dadurch gekennzeichnet, dass** die Pyrolyse in Schritt C) bei einer Temperatur von 500 bis 650 °C stattfindet.

3. Verfahren nach einem der vorherigen Ansprüche, **dadurch gekennzeichnet, dass** die Pyrolyse in Schritt C) über einen Zeitraum von 0,1 Sekunden bis 10 Stunden, bevorzugt bis 4 Stunden, besonders bevorzugt bis 1 Stunde, stattfindet.

4. Verfahren nach einem der vorherigen Ansprüche, **dadurch gekennzeichnet, dass** die Pyrolyse in Schritt C) bei einem Druck von 1,013 bar oder weniger stattfindet.

5. Verfahren nach einem der vorherigen Ansprüche, **dadurch gekennzeichnet, dass** das Gas bei Schritt D) bei einer Temperatur von 200 bis 300 °C eingeleitet wird.

6. Verfahren nach einem der vorherigen Ansprüche, **dadurch gekennzeichnet, dass** die Abfälle Kunststoffe, bevorzugt Fahrzeugreifen und/oder andere technische Kautschukartikel, umfassen.

## Claims

1. Process for producing carbon black from wastes comprising at least the following process steps:
A) providing wastes;
B) optionally preheating the wastes to a temperature of 50°C to 200°C;
C) pyrolyzing the wastes by means of microwaves and with exclusion of oxygen in a reaction chamber at a temperature of 400°C to 800°C to obtain carbon black and pyrolysis gas as the product, wherein the pyrolysis gas is discharged from the reaction chamber so that it is not present in step D);
D) cooling the carbon black; wherein
in step D) a gas is passed over the wastes/the carbon black at a temperature of 100°C to 300°C and wherein the gas comprises at least one substance selected from the group consisting of carbon oxides, such as especially carbon monoxide (CO) and carbon dioxide (CO₂), sulfur oxides, such as especially sulfur monoxide (SO), sulfur dioxide (SO₂), sulfur trioxide (SO₃) and sulfur tetroxide (SO₄), nitrogen oxides, such as especially nitrogen monoxide (NO), dinitrogen trioxide (N₂O₃), nitrogen dioxide (NO₂), water (H₂O) and oxygen (O₂).

2. Process according to any of the preceding claims, **characterized in that** the pyrolysis in step C) is carried out at a temperature of 500°C to 650°C.

3. Process according to any of the preceding claims, **characterized in that** the pyrolysis in step C) is carried out over a period of 0.1 seconds to 10 hours, preferably up to 4 hours, particularly preferably up to 1 hour.

4. Process according to any of the preceding claims, **characterized in that** the pyrolysis in step C) is carried out at a pressure of 1.013 bar or less.

5. Process according to any of the preceding claims, **characterized in that** in step D) the gas is introduced at a temperature of 200°C to 300°C.

6. Process according to any of the preceding claims, **characterized in that** the wastes comprise plastics, preferably vehicle tyres and/or other technical rubber articles.

## Revendications

1. Procédé de production de noir de carbone à partir de déchets, comprenant au moins les étapes suivantes :
A) fourniture de déchets ;
B) préchauffage facultatif des déchets à une température de 50 à 200°C ;
C) pyrolyse des déchets au moyen de micro-ondes et à l'exclusion de l'oxygène dans une chambre de réaction à une température de 400 à 800°C, cela permettant d'obtenir comme produit du noir de carbone et du gaz de pyrolyse, le gaz de pyrolyse étant évacué de la chambre de réaction de sorte qu'il ne soit pas disponible lors de l'étape D) ;
D) refroidissement du noir de carbone ; dans lequel
lors de l'étape D), un gaz est amené à passer sur les déchets ou le noir de carbone à une température de 100 à 300°C, et dans lequel le gaz comprend au moins une substance choisie dans le groupe constitué par des oxydes de carbone, tels que notamment le monoxyde de carbone (CO) et le dioxyde de carbone (CO₂), des oxydes de soufre, tels que notamment le monoxyde de soufre (SO), le dioxyde de soufre (SO₂), le trioxyde de soufre (SO₃) et le tétraoxyde de soufre (SO₄), des oxydes d'azote, tels que notamment le monoxyde d'azote (NO), le trioxyde de diazote(N₂O₃), le dioxyde d'azote (NO₂), l'eau (H₂O) et l'oxygène (O₂).

2. Procédé selon l'une quelconque des revendications précédentes, **caractérisé en ce que** la pyrolyse de l'étape C) a lieu à une température de 500 à 650°C.

3. Procédé selon l'une quelconque des revendications précédentes, **caractérisé en ce que** la pyrolyse de l'étape C) a lieu pendant une durée de 0,1 seconde à 10 heures, de préférence à 4 heures, et de manière particulièrement préférée à 1 heure.

4. Procédé selon l'une quelconque des revendications précédentes, **caractérisé en ce que** la pyrolyse de l'étape C) a lieu sous une pression de 1,013 bars ou moins.

5. Procédé selon l'une quelconque des revendications précédentes, **caractérisé en ce que**, lors de l'étape D), le gaz est introduit à une température de 200 à 300°C.

6. Procédé selon l'une quelconque des revendications précédentes, **caractérisé en ce que** les déchets comprennent des matières plastiques, de préférence des pneus de véhicules et/ou d'autres articles techniques en caoutchouc.
